# EUROPÄISCHE PATENTSCHRIFT

(11) **EP 3 807 008 B1**
(45) Veröffentlichungstag und Bekanntmachung des Hinweises auf die Patenterteilung: **24.08.2022**
(21) Anmeldenummer: 20771219.1
(22) Anmeldetag: 01.09.2020
(51) Int. Cl.: B02C 17/14, B02C 17/18

(54) **LABORMÜHLE**
LABORATORY MILL
BROYEUR DE LABORATOIRE

(30) Priorität: 06.09.2019 DE 102019123976; 30.12.2019 DE 102019135864; 23.01.2020 DE 102020101565
(43) Veröffentlichungstag der Anmeldung: 21.04.2021
(73) Patentinhaber: Retsch GmbH, 42781 Haan (DE)
(72) Erfinder: ORTH, Uwe, 52156 Monschau (DE); ORHAN, Zilan, 58452 Witten (DE); MÄHLER, Stefan, 42551 Verlbert (DE); MÜHLIG, Alexander, 50859 Köln (DE)
(74) Vertreter: Schleitzer, Dirk-Karsten
(86) Internationale Anmeldenummer: PCT/EP2020/074288
(87) Internationale Veröffentlichungsnummer: WO 2021/043739

(56) Entgegenhaltungen:
- EP-B1- 2 391 454
- DE-A1-102006 047 498

## Beschreibung

Die Erfindung betrifft eine Labormühle mit wenigstens einer schwingfähig gelagerten Mahlbecherhalterung für wenigstens einen Mahlbecher und mit wenigstens einer Leitung zum Transport eines flüssigen oder gasförmigen Mediums, wobei die Leitung wenigstens ein Ausgleichselement zum Ausgleich von Relativbewegungen zwischen der Mahlbecherhalterung und/oder dem Mahlbecher und einem stationären Teil der Labormühle aufweist.

Bei Schwingmühlen für den Laborbetrieb ist es bekannt, zur effizienten Zerkleinerung von insbesondere spröden Materialien eine zusätzliche Versprödung des zu zerkleinernden Materials durch Kühlung mit flüssigem Stickstoff herbeizuführen. Die Kühlung erfolgt bei bekannten Verfahren beispielsweise durch Eintauchen des Mahlbechers in flüssigen Stickstoff, mit dem eine Mahlbecherhalterung geflutet wird. Hierzu muss der flüssige Stickstoff kontinuierlich der Mahlbecherhalterung zugeführt und von dieser weggeführt werden. In diesem Zusammenhang ist es bekannt, die Versorgung mit dem flüssigen oder gasförmigen Medium, beispielsweise Stickstoff, mittels entsprechend angeordneter flexibler Schläuche durchzuführen. Hierbei werden die Schläuche direkt an der Mahlbecherhalterung befestigt, wobei dann eine strömungstechnische Verbindung zwischen der Mahlbecherhalterung und dem eingesetzten Mahlbecher besteht. Beim praktischen Gebrauch besitzen diese flexiblen Schlauchverbindungen wegen der großen Amplitude der Wechselbeanspruchung durch die Bewegung des Mahlbechers aber eine geringe Lebensdauer. Insbesondere bei der Verwendung von flüssigem Stickstoff als Kühlmedium sind daher zusätzliche Sicherheitsvorkehrungen nötig, um die Gefährdung von Person bei einem Versagen der Schlauchverbindungen auszuschließen.

Neben der Stickstoffanwendung nutzen andere Anwendungen das kurzfristige lokale Freisetzen größerer Energiemengen beim Mahlvorgang zur Einleitung chemischer Reaktionen. Je nach den eintretenden Reaktionen muss der Mahlbecher unter Umständen gekühlt oder beheizt werden. Auch dies erfordert dessen kontinuierliche Versorgung mit einem Medium zur Temperierung des Reaktionsraums.

In wiederum anderen Anwendungsfällen werden bei der Zerkleinerung des Mahlgutes Gase frei, die Gegenstand einer weiteren Analyse sein können. Diese Gase müssen daher kontinuierlich aus dem Mahlbecher abgeführt und es muss das entnommene Volumen durch eine entsprechende Gaszufuhr ausgeglichen werden.

Aus der EP 2 391 454 B1 ist eine Labormühle mit Drehdurchführungen für die mit einem Medium zu versorgenden Mahlbecher bekannt. Hier ist es vorgesehen, dass an jedem Mahlbecher zwei Leitungen zur Zufuhr und zur Abfuhr des Mediums angeschlossen und beide Leitungen über die Drehdurchführung geführt sind, wobei an dem stationären Teil der Drehdurchführung zwei externe Anschlüsse für die ortsfesten Leitungen der Labormühle und an dem beweglichen Teil der Drehdurchführung zwei interne Anschlüsse für die zum Mahlbecher führenden Leitungen ausgebildet sind.

Überdies geht aus der DE 10 2006 047 498 A1 eine Kugelmühle hevor, die eine Kühleinrichtung aufweist, welche ein Kühlmedium auf eine rotierende Trägervorrichtung leitet und einer Mahlstation zuführt, um die durch den Mahlvorgang entstehende Wärme von den Materialgefäßen abzuführen.

Durch die Verwendung einer Drehdurchführung kann die Verbindung des Mahlbechers mit der Zufuhr- bzw. Abfuhrleitung für das Medium über ein weitgehend starres Leitungssystem erfolgen, wobei Relativbewegungen zwischen dem beweglichen Mahlbecher und dem ortsfesten Teil der Drehdurchführung bzw. einem ortsfesten Ver- bzw. Entsorgungssystem, das mit den ortsfesten Leitungen an der Drehdurchführung verbunden ist, über das relativ zum stationären Teil bewegbare bewegliche Teil der zwischengeschalteten Drehdurchführung kompensiert wird. Die jeweiligen Bewegungen werden dabei innerhalb der Drehdurchführung auf einen kleinstmöglichen Radius reduziert. Wegen der so minimierten Relativgeschwindigkeit und Relativbewegung zwischen dem stationären und beweglichen Teil der Drehdurchführung kann eine berührende Dichtung verwendet werden, die zwischen den miteinander fluchtenden Bohrungsabschnitten im stationären wie im beweglichen Teil der Drehdurchführung wirksam ist.

Wenngleich Relativbewegungen zwischen dem beweglichen Mahlbecher und einer ortsfesten Verbindung an der Labormühle durch die Verwendung einer Drehdurchführung gut kompensiert werden können, kann es aufgrund der Wechselbeanspruchung durch die Bewegung des Mahlbechers zu einer Ermüdung der berührenden Dichtung in der Drehdurchführung kommen, so dass eine dauerhaft leckstabile Verbindung zwischen dem beweglichen Teil und dem stationären Teil der Drehdurchführung nicht gewährleistet ist. In der Folge kann es zum Auftreten von Leckagen, d.h. zum Austritt des über die Leitung zum und vom Mahlbecher geführten Mediums kommen, und somit zu einer Kontamination der Umgebung und einem Verlust des Mediums. Darüber hinaus führt die Verwendung eines als Drehdurchführung ausgebildeten zusätzlichen Bauteils zum Ausgleich von Relativbewegungen zu einem erhöhten Montageaufwand und höheren Gerätekosten der bekannten Labormühle.

Bei einer anderen Ausführungsform der aus der EP 2 391 454 B1 bekannten Labormühle sind im Inneren von stationärem Teil und beweglichem Teil der Drehdurchführung keine Bohrungen ausgebildet, sondern es sind die zugeordneten Anschlüsse für die Zulaufleitung bzw. Rücklaufleitung an dem stationären Teil einerseits und die Anschlüsse für die Zuleitung und die Rückleitung an dem beweglichen Teil andererseits durch flexible Leitungsabschnitte in Form von Schläuchen verbunden. Wie bereits oben beschrieben, besitzen Schlauchverbindungen aber durch die Wechselbeanspruchung eine geringe Lebensdauer, so dass auch hier eine leckagefreie Verbindung nicht ohne Weiteres über eine lange Betriebsdauer der Mühle gewährleistet ist.

Aus der GB 2 257 379 A ist eine Labormühle zum Aufmahlen einer zu vermahlenden partikelbeinhaltenden Suspension bekannt, wobei die Suspension während des Mahlvorgangs kontinuierlich aus einem Tank über eine ortsfeste Leitung dem sich drehenden Mahlbecher zugeführt wird. Hierzu ist zwischen der ortsfesten Leitung und der dem Mahlbecher angeordneten Zuleitung eine Drehdurchführung ausgebildet, indem das Ende der ortsfesten Leitung als stationäres Teil in eine Gleitverbindung mit dem Ende eines an die Rotationsbewegung des Mahlbechers gekoppelten beweglichen Stutzens gebracht ist.

In der GB 1 265 735 A ist eine Mühle mit einem Mahlgefäß beschrieben, dessen Mantel durch Zufuhr eines Kühlmittels gekühlt wird. Auch hier wird das Kühlmittel von einer stationären Leitung in einen sich mit dem Mahlgefäß drehenden Leitungsabschnitt mittels einer Drehdurchführung eingespeist.

Die Erfindung liegt die Aufgabe zugrunde, eine Labormühle mit den eingangs genannten Merkmalen bereitzustellen, bei der beim Betrieb der Labormühle auftretende Relativbewegungen zwischen der Mahlbecherhalterung bzw. dem Mahlbecher und einem stationären Teil der Mühle in konstruktiv einfacher Weise und bei geringen Gerätekosten ausgeglichen werden und wobei der Bewegungsausgleich eine hohe Sicherheit gegen das Auftreten von Leckagen im Langzeitbetrieb der Mühle gewährleistet.

Die vorgenannte Aufgabe wird durch eine Mühle mit den Merkmalen von Anspruch 1 gelöst. Vorteilhafte Ausführungsformen der Erfindung sind Gegenstand der Unteransprüche.

Zur Lösung der vorgenannten Aufgabe wird bei einer ersten alternativen Ausführungsform der Erfindung ein im Wesentlichen steif bzw. starr ausgebildetes Ausgleichselement vorgesehen, das bei einer Schwingungsbewegung der Mahlbecherhalterung zum Ausgleich von Relativbewegungen zumindest bereichsweise elastisch verformt wird, wobei der Ausgleich von Relativbewegungen frei von relativ zueinander bewegbar, insbesondere über einen Drehpunkt oder eine Drehachse drehbar und/oder schwenkbar, mechanisch und/oder gleitend miteinander verbundenen, separaten Teilen des Ausgleichselements erfolgt. Der Ausgleich von Relativbewegungen erfolgt vorzugsweise im Wesentlichen lediglich bzw. ausschließlich durch elastische Verformung des Ausgleichselements.

Das Ausgleichselement ermöglicht durch vorzugsweise lediglich elastische, und insbesondere nicht plastische oder nicht plastisch-elastische, Verformung einen im Wesentlichen spannungsneutralen Ausgleich von Relativbewegungen bei geringem Verformungswiderstand, so dass es durch die Verformung des Ausgleichselements bei der Schwingungsbewegung der Mahlbecherhalterung zu keiner oder einer lediglich vernachlässigbaren Erhöhung der zur Erzeugung der Schwingungsbewegung erforderlichen Motorantriebsleistung kommt. Zudem ist eine konstruktiv einfache Realisierung des Bewegungsausgleichs möglich, was einen wartungsarmen Betrieb und geringe Herstellungskosten der erfindungsgemäßen Mühle zulässt.

Durch den Verzicht auf bewegbar miteinander verbundenen Teilen des Ausgleichselements ist eine dauerhaft hermetisch geschlossene Verbindung zwischen der Mahlbecherhalterung und/oder dem Mahlbecher und dem stationären Teil der Mühle sichergestellt. Die Erfindung lässt insbesondere eine Verbindung zwischen der die Schwingungsbewegung ausführenden Mahlbecherhalterung und/oder dem Mahlbecher einerseits und einem stationären Teil der Mühle andererseits zu, bei der zum Ausgleich von Relativbewegungen Drehdurchführungen, Dichtungselemente und/oder flexible Schläuche nicht vorgesehen sein müssen.

Das Ausgleichselement wirkt als Federelement, das Relativbewegungen durch bereichsweise Auslenkung bzw. Verformung kompensiert. Beim Ausgleich der Relativbewegungen kann das Ausgleichselement selbst in Schwingungen versetzt werden.

Besonders bevorzugt ist das Ausgleichselement als Drehfeder ausgebildet oder wirkt als solche.

Die Federsteifigkeit einer zum Transport eines flüssigen oder gasförmigen Mediums vorgesehenen Ausgleichsleitung zwischen einem stationären Teil der Labormühle einerseits und der schwingfähigen Mahlbecherhalterung und/oder dem Mahlbecher andererseits, insbesondere die Federsteifigkeit einer metallischen Leitung, weiter insbesondere einer im Wesentlichen starren Rohrleitung, kann im Bereich zwischen 0,05 Nm/DEG bis 5,0 Nm/DEG liegen. Vorzugsweise liegt die Federsteifigkeit im Bereich zwischen 0,1 bis 0,5 Nm/DEG, beispielsweise zwischen 0,1 und 0,2 Nm/DEG.

Je nach Steifigkeit des Ausgleichselements kann die Federsteifigkeit der Leitungsverbindung zwischen der Mahlbecherhalterung und/oder dem Mahlbecher und/dem stationären Teil der Labormühle auch größer sein. Die vorgenannten Werte beziehen sich insbesondere auf eine Ausbildung der Leitungsverbindung zwischen der Mahlbecherhalterung und/oder dem Mahlbecher einerseits und dem stationären Teil der Labormühle andererseits als starre Rohrleitung mit einem wendelförmigen oder in Form einer ebenen oder räumlichen Spirale ausgebildeten Leitungsabschnitt als Ausgleichselement. Eine maximale Federsteifigkeit kann durch ein starres metallisches Rohr ohne Windungen erreicht werden. Die Federsteifigkeit kann dann beispielsweise Werte zwischen 2 und 4 Nm/DEG annehmen. Bei zu großer Federsteifigkeit kommt es jedoch zu plastischen Verformungen schon bei geringer Auslenkung der Leitungsverbindung in Folge der Schwingungsbewegung der Labormühle, so dass ein dauerhafter Ausgleich von Relativbewegungen über die Leitungsverbindung beeinträchtigt wird. Es kann dann schon bei wenigen Lastspielen zu einer plastischen Verformung der Leitungsverbindung bis hin zum Leitungsbruch kommen.

Bei der Berechnung der Federsteifigkeit wird die Leitung behandelt wie ein einseitig eingespannter Balken, der an seinem "freien", d.h. an der Mahlbecherhalterung und/oder dem Mahlbecher anzuschließenden Leitungsende in Folge der Schwingungsbewegung der Mahlbecherhalterung und/oder des Mahlbechers ausgelenkt wird. Die Federsteifigkeit der Leitung ergibt sich aus dem Quotienten des am schwingfähigen Ende der Leitung resultierenden Drehmoments in [Nm] und dem Drehwinkel in [Winkelgrad, DEG] der Auslenkung am schwingfähigen Ende der Leitung, wobei das schwingfähige Ende der Leitung an der Mahlbecherhalterung und/oder dem Mahlbecher angeschlossen ist. Der Drehwinkel der Auslenkung ergibt sich aus der Auslenkung des schwingfähigen Endes der Leitung beim Betrieb der Labormühle bezogen auf die Länge des Hebelarms zwischen dem stationären Leitungsende und dem schwingfähigen Ende der Leitung. Der Drehwinkel entspricht dem Quotienten gebildet aus der Auslenkung und dem Hebelarm.

Erfindungsgemäß wird ein vorzugsweise im Wesentlichen steifes bzw. starres Ausgleichselement zur Kompensation von Relativbewegungen eingesetzt. Ein "im Wesentlichen steifes bzw. starres Ausgleichselement" im Sinne der Erfindung ist ein solches, das eine noch ausreichend geringe Steifigkeit aufweist, um durch elastische Verformung einen Ausgleich von Relativbewegungen zwischen der Mahlbecherhalterung und/oder dem Mahlbecher und einem stationären Teil der Labormühle beim Betrieb der Labormühle zuzulassen. Die Steifigkeit beschreibt hierbei den Widerstand des Ausgleichselements gegen Verformung durch bei der Relativbewegung der Mahlbecherhalterung und/oder des Mahlbechers einerseits und dem stationären Teil der Labormühle andererseits auftretende Kräfte oder Momente. Die Steifigkeit des Ausgleichselements hängt zum einen von den elastischen Eigenschaften des Werkstoffs, d.h. dem Elastizitätsmodul, und zum anderen von der Geometrie des Ausgleichselements ab.

Der Begriff "starres" oder "steifes" Ausgleichselement dient insbesondere zur Abgrenzung gegenüber flexiblen Schläuchen. Unter einem "starren" oder "steifen" Ausgleichselement im Sinne der Erfindung sind insbesondere Federelemente zu verstehen, die eine im Vergleich zu flexiblen Schläuchen deutlich höhere Steifigkeit aufweisen, aber infolge der Schwingungsbewegung der Mahlbecherhalterung ausgelenkt werden und nach Beendigung der Schwingungsbewegung wieder selbsttätig in die Ursprungsform zurückkehren.

Die Leitung und/oder das Ausgleichselement kann aus Metall, insbesondere aus Edelstahl, oder aus einem Kunststoff, insbesondere PTFE, bestehen und/oder ein Metall, insbesondere Edelstahl, und/oder einen Kunststoff, insbesondere PTFE, aufweisen. Bei Verwendung von Kunststoffen ist vorzugsweise eine Temperaturbeständigkeit und Beständigkeit gegen Versprödung bei Temperaturen von -100 °C oder weniger, insbesondere bei weniger als -150 °C, von Vorteil.

Die Leitung und/oder das Ausgleichselement können insbesondere aus einem Kunststoff bestehen und/oder einen Kunststoff aufweisen, der ausgewählt ist aus der Gruppe der Polyphenylensulfide, insbesondere PPS GF40, der Perfluoralkoxy-Polymere (PFA), der flüssigkristallinen Polymere, insbesondere LCP GF30, LCP GF30 HT, LCP GF30 ELS, der Polycarbonate, insbesondere PC V0, PC V0 E, PC FDA, PC USP, PC GF10 V0, PC GF30, der Polysulfone, insbesondere PSU GF20, PSU GF30, der Polyethersulfone, insbesondere PES GF20, PES GF30, der Polyphenylsulfone; der Polyetherimide, insbesondere PEI GF30, PEI GF30 FAR; der Polyethylene, insbesondere PE-UHWM, PE-HMW, PE-HD, PE-LD; und/oder der Ethylen-Vinylacetat-Copolymere (E/VA) und/oder der Polyamide.

Die Herstellung der Leitung und/oder des Ausgleichselements kann durch additive Fertigungsverfahren, wie Lasersintern, bei dem räumliche Strukturen durch sintern mit einem Laser aus einem pulverförmigen Ausgangsstoff hergestellt werden, erfolgen. Es kann ein polymerer Ausgangsstoff und/oder ein metallischer Ausgangsstoff zum Einsatz kommen.

Das Ausgleichselement besteht vorzugsweise aus Metall, insbesondere aus Edelstahl oder einem Leichtmetall, wie Aluminium. Damit ist eine Materialbeständigkeit des Ausgleichselement auch bei tiefen Temperaturen gegeben.

Vorzugsweise ist das Ausgleichselement als Rohrkörper ausgebildet. Hierbei ist der Begriff "Rohrkörper" breit zu verstehen und umfasst jeden länglichen Hohlkörper, dessen Länge größer als sein Durchmesser ist. Im Gegensatz zu einem Schlauch ist der Rohrkörper aus relativ unflexiblem Material gefertigt. Vorzugsweise weist der Rohrkörper einen kreisrunden Querschnitt auf, wobei zur Verwendung als Ausgleichselement grundsätzlich auch Rohrkörper mit rechteckigen, ovalen und anderen Querschnitten eingesetzt werden können. Der Außendurchmesser des Rohrkörpers kann zwischen 4 bis 12 mm, vorzugsweise zwischen 6 und 10 mm, beispielsweise 8 mm, betragen. Die Wandstärke des Rohrkörpers kann zwischen 0,1 und 1,0 mm, vorzugsweise zwischen 0,2 und 0,5 mm, betragen.

Der Rohrkörper kann vorzugsweise eine glatte, nicht-gewellte äußere und/oder innere Mantelfläche aufweisen. Dies lässt den Einsatz von Standard-Rohrleitungen zur Ausbildung des Ausgleichselements zu.

Bei einem mit der Leitung zur Mahlbecherhalterung und/oder zum Mahlbecher verbundenen stationären Teil der Mühle handelt es sich um ein Bauteil oder einen Bereich der Mühle, das bzw. der relativ zur Mahlbecherhalterung stationär angeordnet und von der Schwingungsbewegung der Mahlbecherhalterung entkoppelt ist bzw. nicht der Schwingungsbewegung der Mahlbecherhalterung folgt. Der stationäre Teil der Labormühle kann insbesondere mit einem Ver- und Entsorgungssystem für das Medium verbunden sein. Ein stationäres Bauteil der Mühle kann beispielsweise zusammen mit einer Lagerung der Mahlbecherhalterung auf einer gemeinsamen Grundplatte angeordnet und/oder mit einem Bodenteil der Mühle verbunden sein. Dies schließt aber nicht aus, dass der stationäre Teil der Mühle und die Mahlbecherhalterung schwingungsgedämpft gelagert sind und beim Betrieb der Mühle in Schwingungen versetzt werden.

Bei einer "Schwingungsbewegung" der Mahlbecherhalterung bzw. des Mahlbechers handelt es sich im Sinne der Erfindung um jede periodische Bewegung, insbesondere Schwenk- oder Drehbewegung, der Mahlbecherhalterung bzw. des Mahlbechers, wobei eine reine Rotationsbewegung der Mahlbecherhalterung bzw. des Mahlbechers von 360° ausgenommen ist. Vorzugsweise führt der Mahlbecher beim Betrieb der Mühle kreisbogenförmige Schwenkbewegungen aus, weiter vorzugsweise über einen Drehwinkel von weniger als 20°, besonders bevorzugt von weniger als 15°, beispielsweise von ca. 12°.

Der Schwingweg des Mahlbechers, bezogen auf einen Mittelpunkt eines Mahlraums im Inneren des Mahlbechers, kann zwischen 15 und 60 mm, vorzugsweise zwischen 20 und 50 mm, beispielsweise zwischen 20 und 30 mm, betragen. Der Schwingweg ist im Sinne der Erfindung bezogen auf die doppelte Amplitudenlänge bei der periodischen Hin- und Herbewegung des Mahlbechers.

Es ist insbesondere zweckmäßig, wenn das Ausgleichselement aus einem bei Temperaturen von weniger als - 150 °C, insbesondere bei Temperaturen von weniger als - 190 °C, kältebeständigem Material besteht. Insbesondere besteht das Ausgleichselement aus einem Werkstoff, der bei tiefen Temperaturen, insbesondere bei der Siedetemperatur von Stickstoff, also unter Normaldruck bei -196 °C, widerstandsfähig ist und nicht zur Versprödung neigt. Weiter insbesondere besteht das Ausgleichselement aus einem Material, das bei tiefen Temperaturen nicht kalt versprödet, was zu Brüchen führen kann, sofern die Konstruktion dies nicht ausreichend berücksichtigt. Grundsätzlich könnte das Ausgleichselement aber auch aus einem Kunststoff bestehen, der eine ausreichend geringe Glasübergangstemperatur aufweist, bei deren Unterschreiten das Material vom weichen in den spröden, glasartigen Zustand übergeht.

Es ist weiter zweckmäßig, wenn die zum Transport des gasförmigen oder flüssigen Mediums vorgesehene Leitung über die gesamte Länge zwischen einem Anschluss an die Mahlbecherhalterung und/oder den Mahlbecher und einem Anschluss an den stationären Teil der Mühle als starre Rohrleitung ausgebildet ist und damit insbesondere keine flexiblen schlauchförmigen Abschnitte und/oder Dichtungselemente aufweist. Ausgenommen können beispielsweise Ringdichtungen sein an den Anschlussstellen der Leitung an die Mahlbecherhalterung und/oder den Mahlbecher bzw. den stationären Teil der Mühle. Die Leitung kann einteilig oder auch mehrteilig ausgebildet sein. Vorzugsweise ist die Leitung zumindest im Bereich des Ausgleichselements bzw. Abschnitts unterbrechungfrei ausgebildet, der im Wesentlichen den Ausgleich von Relativbewegungen zwischen der Mahlbecherhalterung und/oder den Mahlbecher und dem stationären Teil ermöglicht.

Ist die Leitung über die gesamte Länge als starre Rohrleitung ausgebildet, kann es bei der Schwingungsbewegung der Mahlbecherhalterung grundsätzlich zu einer elastischen Verformung der Leitung über die gesamte Leitungslänge kommen, so dass dann die gesamte Leitung als Ausgleichselement wirkt. Die Leitung kann dann in der Art einer Feder, beispielsweise einer Stabfeder, wirken.

Vorzugsweise wird aber das Ausgleichselement durch einen Rohrleitungsabschnitt der Leitung gebildet, der sich nicht bis zu den Leitungsenden erstreckt. Beispielsweise kann durch die Geometrie der Leitungsführung ein Leitungsabschnitt gebildet sein, der als federndes Ausgleichselement wirkt und der bei der Schwingungsbewegung der Mahlbecherhalterung stärker verformt wird als die Leitungsenden der Leitung. Die Leitungsenden werden bei der Schwingungsbewegung der Mahlbecherhalterung vorzugsweise wenig oder gar nicht verformt.

Das Ausgleichselement kann grundsätzlich auch durch einen geradlinigen Rohrleitungsabschnitt der Leitung gebildet sein. Bei einer bevorzugten Ausführungsform ist aber vorgesehen, dass ein als Ausgleichselement wirkender Rohrleitungsabschnitt der Leitung zumindest abschnittsweise bogenförmig oder abgewinkelt ausgebildet ist und eine Schikane bzw. Leitungsverlängerung in der Leitungsführung bildet, wobei die Leitung angrenzend an das Ausgleichselement insbesondere weitere geradlinige Leitungsabschnitte aufweisen kann, die in Richtung zur Mahlbecherhalterung bzw. zum Mahlbecher einerseits und/oder in Richtung zum stationären Teil andererseits führen und mit den Enden an die Mahlbecherhalterung bzw. den Mahlbecher und den stationären Teil angeschlossen bzw. anschließbar sind.

Vorzugsweise erfolgt der Ausgleich von Relativbewegungen zwischen der Mahlbecherhalterung und/oder dem Mahlbecher einerseits und dem stationären Teil der Mühle andererseits durch Vergrößerung der Leitungslänge einer zur Verbindung der Mahlbecherhalterung und/oder des Mahlbechers mit dem stationären Teil der Mühle vorgesehenen Leitung. Zu diesem Zweck kann ein Ausgleichselement in der Leitung vorgesehen sein oder einen Abschnitt der Leitung bilden, das eine von einer geraden Linienform abweichende Geometrie bzw. einen nicht-geraden Leitungsverlauf aufweist. Dieser Aspekt der Erfindung lässt sich bei starren bzw. steifen Ausgleichselementen, wie starren Rohrleitungsabschnitten, und auch bei flexiblen Ausgleichselementen, wie flexiblen Schläuchen, gleichermaßen realisieren. Somit lässt sich in einfacher Weise eine Vergrößerung der tatsächlichen Leitungslänge gegenüber eine geradlinigen Leitungsführung erreichen. Durch die größere Leitungslänge ist eine ausreichend große Verformung zum Ausgleich von Relativbewegungen bei geringem Verformungswiderstand möglich.

Das Verhältnis der Länge des gebogenen und/oder abgewinkelten Rohrleitungs- oder Schlauchabschnitts zur Leitungslänge bei entsprechender geradliniger Leitungsführung zwischen einem Leitungsanfang des Ausgleichselements und einem Leitungsende des Ausgleichsabschnitts kann vorzugsweise wenigstens 5, weiter vorzugsweise wenigstens 10, betragen, um einen ausreichend geringen Verformungswiderstand beim Ausgleich von Relativbewegungen sicherzustellen. Der Leitungsanfang und das Leitungsende des Ausgleichselements kann durch den Leitungsübergang von einem spiral- oder wendelförmig gebogenen Leitungsabschnitt zu im Wesentlichen geraden zur Mahlbecherhalterung und/oder zum Mahlbecher einerseits und zum stationären Teil der Mühle andererseits führenden Leitungsabschnitten festgelegt sein.

Beispielweise kann das Ausgleichselement durch einen U-förmigen oder faltenbalgförmig verlaufenden Leitungsabschnitt der Leitung gebildet sein. In Zusammenhang mit der Erfindung durchgeführte Versuche haben gezeigt, dass insbesondere ein als Ausgleichselement vorgesehener wendelförmiger oder in Form einer ebenen oder räumlichen Spirale ausgebildeter Leitungsabschnitt ein besonders gutes Verformungsverhalten bei geringem Verformungswiderstand aufweist. Das Leitungselement kann dann in der Art einer Drehfeder ausgebildet sein. Bei der Wechselbeanspruchung durch den schwingenden Mahlbecher kommt es dann zu einer abnehmenden Auslenkung des Ausgleichselements von Windung zu Windung. Durch die Ausbildung in der Art einer Drehfeder ist ein Längenausgleich in allen Raumrichtungen möglich.

Der Leitungsabschnitt kann kreisförmige oder der Kreisform angenäherte Windungen aufweisen. Die Windungen können auch polygonförmig sein mit beispielsweise geradlinigen Seitenabschnitten und bogenförmigen Eckabschnitten. Besonders bevorzugt weist der das Ausgleichselement bildende Leitungsabschnitt eine Mehrzahl von Windungen auf, beispielsweise wenigstens drei, vorzugsweise vier oder fünf Windungen.

Die Mahlbecherhalterung und/oder ein Mahlbecher kann an wenigstens zwei Leitungen zur Zuleitung und Ableitung eines flüssigen oder gasförmigen Mediums angeschlossen und/oder anschließbar sein, wobei jede Leitung dann wenigstens ein in der Art eines Federelements wirkendes starres Ausgleichselement aufweist. Damit wird eine dauerhaft leckstabile Verbindung beider Leitungen sichergestellt. Bei der zuvor beschriebenen Ausführungsform kann jedes Ausgleichselement durch einen wendelförmig gebogenen oder als ebene oder räumliche Spirale ausgebildeten Leitungsabschnitt ausgeführt sein.

Um den zur Anordnung der Ausgleichselemente in einem Mühlengehäuse erforderlichen Bauraum zu minimieren, können die zum Ausgleich vorgesehenen Leitungsabschnitte der beiden Leitungen als ineinander geschachtelte und/oder einander durchsetzende Raumgebilde ausgebildet sein.

Eine besonders platzsparende Anordnung und die Sicherstellung ausreichend langer Verformungsabschnitte in beiden Leitungen sind möglich, wenn die Ausgleichselemente der beiden Leitungen jeweils als wendelförmiger oder in Form einer ebenen oder räumlichen Spirale ausgebildeter Leitungsabschnitt ausgebildet sind die Leitungsabschnitte eine unterschiedliche Windungszahl und/oder einen unterschiedlichen Umfang aufweisen.

Die den stationären Teil der Labormühle mit der Mahlbecherhalterung und/oder dem Mahlbecher verbindende Leitung und das Ausgleichselement können einstückig ausgebildet sein.

Hinsichtlich der Anwendung der Labormühle ist vorzugsweise vorgesehen, dass das Medium ein flüssiger Stickstoff ist oder dass das eingesetzte flüssige oder gasförmige Medium temperiert ist, beispielsweise um eine Heiz- oder Kühlwirkung für den Mahlbecher zu erzeugen, oder dass das Medium aus einem Analysengas besteht.

In der Zeichnung sind Ausführungsbeispiele der Erfindung wiedergegeben, welche nachstehend beschrieben sind.

Es zeigen
- Fig. 1: eine perspektivische Ansicht einer erfindungsgemäßen Labormühle,
- Fig. 2: eine Draufsicht auf die Labormühle aus Fig. 1,
- Fig. 3: eine Ansicht der Labormühle aus Fig. 1 von unten,
- Fig. 4: eine Seitenansicht der Labormühle aus Fig. 1 und
- Fig. 5: eine perspektivische Darstellung mehrerer Leitungen der in Fig. 1 gezeigten Labormühle, die zur Zuleitung und Ableitung flüssiger oder gasförmiger Temperiermedien in Richtung zur Mahlbecherhalterung bzw. von der Mahlbecherhalterung weg vorgesehen sind, wobei jede Leitung mit einem Leitungsende an die Mahlbecherhalterung und mit einem anderen Leitungsende an einen stationären Teil der Labormühle angeschlossen ist.

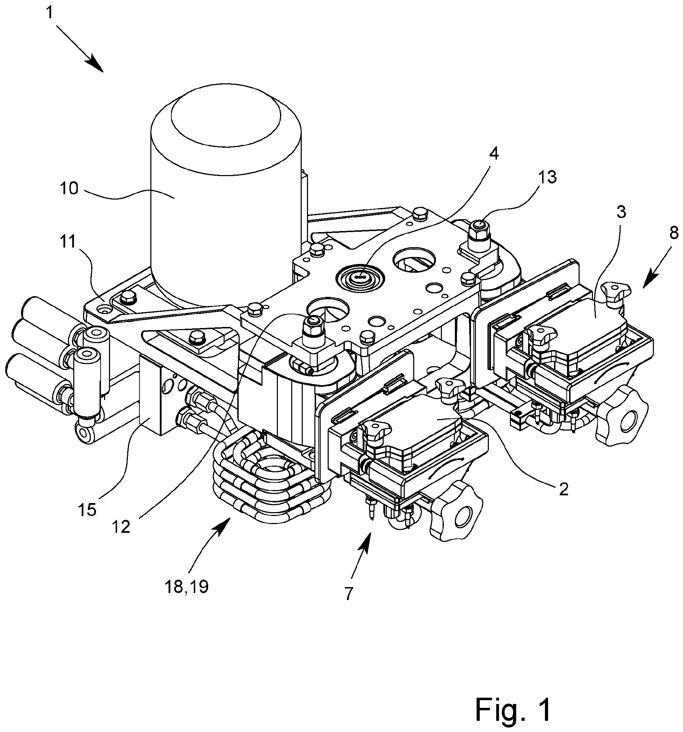

Fig. 1 zeigt eine Draufsicht auf eine Schwingmühle 1 für zwei in horizontaler Lage kreisbogenförmige Schwingungen ausführende Mahlbecher 2, 3 auf. Ein Pendelantrieb der Schwingmühle 1 ist mehrteilig ausgebildet mit einer um eine vertikale Exzenterachse drehbar gelagerten Exzenterwelle 4 und mit zwei jeweils um vertikale Schwingachsen schwingfähig gelagerten und über Koppeln mit der Exzenterwelle 4 verbundenen Schwingen 5, 6. An den Schwingen 5, 6 sind Mahlbecherhalterungen 7, 8 für die Mahlbecher 2, 3 befestigt. Im Übrigen ist eine mit der Exzenterwelle 4 über einen Keilriemen 9 gekoppelte Motoreinheit 10 für eine Drehmomentübertragung vorgesehen. Die Exzenterwelle 4 ist an einer Grundplatte 11 drehbar gelagert. An der Grundplatte 11 sind darüber hinaus zwei Lagerbolzen 12, 13 befestigt, um die die Schwingen 5, 6 drehbar gelagert sind. Schließlich ist die Motoreinheit 10 auf der Grundplatte 11 angeordnet. Die Exzenterwelle 4, die Lagerbolzen 12, 13 und die Motoreinheit 10 bilden so zusammen mit der Grundplatte 11 eine Baueinheit, die über Dämpfungselemente auf einen Boden oder Untergrund aufstehen kann.

Die Motoreinheit 10 überträgt ein Drehmoment über den Keilriemen 9 an die Exzenterwelle 4. Eine Drehbewegung der Exzenterwelle 4 wird über die Koppeln in eine Schwingungsbewegung der Schwingen 5, 6 umgewandelt. Die Schwingfrequenz kann zwischen 3 bis 50 Hz, vorzugsweise bis 35 Hz, betragen. Der Schwingweg (zweifache Amplitudenauslenkung) des Mahlbechers kann zwischen 20 und 50 mm, vorzugsweise zwischen 20 und 30 mm, betragen.

Über eine nicht im Einzelnen gezeigte Temperiereinrichtung ist eine Temperierung der Mahlbecher 2, 3 möglich. Zum Transport eines Temperiermediums, das flüssig oder gasförmig sein kann, von einem stationären Teil 14, 15 der Schwingmühle 1 zu einer Mahlbecherhalterung 7, 8 und zum Ableiten des Mediums von der jeweiligen Mahlbecherhalterung 7, 8 zu dem stationären Teil 14, 15 ist jede Mahlbecherhalterung 7, 8 jeweils mit zwei Leitungen 16, 17 verbunden. Jeweils eine der beiden Leitungen 16, 17 ist für die Zuleitung, die andere der beiden Leitungen 16, 17 für die Ableitung eines Gases oder flüssigen Mediums, insbesondere von flüssigem Stickstoff, zu der jeweiligen Mahlbecherhalterung 7, 8 vorgesehen.

Die Leitungen 16, 17 sind vorzugsweise als durchgehende unterbrechungslose Rohrleitungen ausgebildet. Die Leitungen 16, 17 können beispielsweise aus Edelstahl oder auch aus Kunststoff bestehen oder Edelstahl und/oder Kunststoff aufweisen.

Der Aufbau der Leitungsführung ist bei beiden Mahlbecherhalterungen 7, 8 gleich ausgebildet, so dass nachfolgend lediglich eine Leitungsführung exemplarisch beschrieben wird. Hierbei ist es so, dass die Leitungsanordnung mit den Leitungen 16, 17 einer Mahlbecherhalterung 7 spiegelsymmetrisch zur Leitungsführung der zweiten Mahlbecherhalterung 8 ausgebildet ist.

Zum Ausgleich von Relativbewegungen, die zwischen einer Mahlbecherhalterung 7, 8 und dem über die Leitungen 16, 17 zugeordneten stationären Teil 14, 15 beim Betrieb der Schwingmühle 1 auftreten, weist jede Leitung 16, 17 ein Ausgleichselement 18, 19 auf. Jede Leitung 16, 17 ist die gesamte Länge als starre Rohrleitung ausgebildet, wobei das Ausgleichselement 18, 19 durch einen Rohrleitungsabschnitt der Leitung 16, 17 gebildet wird.

Beim Betrieb der Schwingmühle 1 kommt es infolge der Relativbewegungen zu einer oszillierenden Verformung der die Ausgleichselemente 18, 19 bildenden Rohrleitungsabschnitte, wobei die an die Ausgleichselemente 18, 19 angrenzenden Leitungsabschnitte der jeweiligen Leitung 16, 17 vergleichsweise weniger verformt werden. Durch die Ausbildung der Ausgleichselemente 18, 19 als starre Rohrleitungsabschnitte wird der Ausgleich von Relativbewegungen ermöglicht, ohne hierzu relativ zueinander drehbar und/oder schwenkbar miteinander verbundene Leitungsteile einzusetzen. Insbesondere ist es nicht erforderlich, die aus dem Stand der Technik bekannten Drehdurchführungen zum Ausgleich von Relativbewegungen einzusetzen, so dass eine hermetisch geschlossene, unterbrechungsfreie Verbindung und ein dauerhaft leckagefreier Transport des Temperiermediums zwischen den Mahlbecherhalterungen 7, 8 und den stationären Teilen 14, 15 in einfacher Weise gewährleistet ist. Insbesondere ist es nicht wie bei Drehdurchführungen erforderlich, zum Ausgleich von Relativbewegungen Dichtungselemente einzusetzen.

Zum Anschluss der Leitungen 16, 17 an die Mahlbecherhalterungen 7, 8 einerseits und zum Anschluss an die stationären Teile 14, 15 andererseits können an sich aus dem Stand der Technik bekannte Verbindungs- und Zubehörteile der Montagetechnik vorgesehen sein. Der Anschluss der Leitungen als solcher, also entkoppelt von dem Ausgleich von Relativbewegungen, kann über Dichtmittel erfolgen, um eine dichtende Verbindung zwischen der jeweiligen Leitung 16, 17 und der Mahlbecherhalterung 7, 8 einerseits sowie dem stationären Teil 14, 15 andererseits zu ermöglichen.

Jedes Ausgleichselement 18, 19 ist als wendelförmiger Rohrleitungsabschnitt mit mehreren Wendeln bzw. Wicklungen ausgebildet und wird durch im Wesentlichen geradlinige Leitungsabschnitte 20 und bogenförmige Eckabschnitte 21 gebildet. Bei dem Bewegungsausgleich nimmt die Verformung der Rohrleitungsabschnitte, die die Ausgleichselemente 18, 19 bilden, von Wendel zu Wendel ab, so dass die Rohrleitungsabschnitte am Ende der jeweils letzten Wendel im Wesentlichen nicht mehr verformt werden. Im Ergebnis findet der Bewegungsausgleich im Wesentlichen ausschließlich im Bereich der Ausgleichselemente 18, 19 statt.

Die Ausbildung der Ausgleichselemente 18, 19 erfolgt beispielsweise durch Umformen, wie Biegen, geradliniger Rohrabschnitte der Leitungen 16, 17.

Die Ausgleichselemente 18, 19 von zwei mit einer Mahlbecherhalterung 7, 8 verbundenen Leitungen 16, 17 sind als ineinander geschachtelte Wendel ausgebildet. Damit wird ein Ausgleich von Relativbewegungen in allen Raumrichtungen bei geringem zur Installation der Leitungen 16, 17 im Inneren der Schwingmühle 1 erforderlichen Bauraum realisiert.

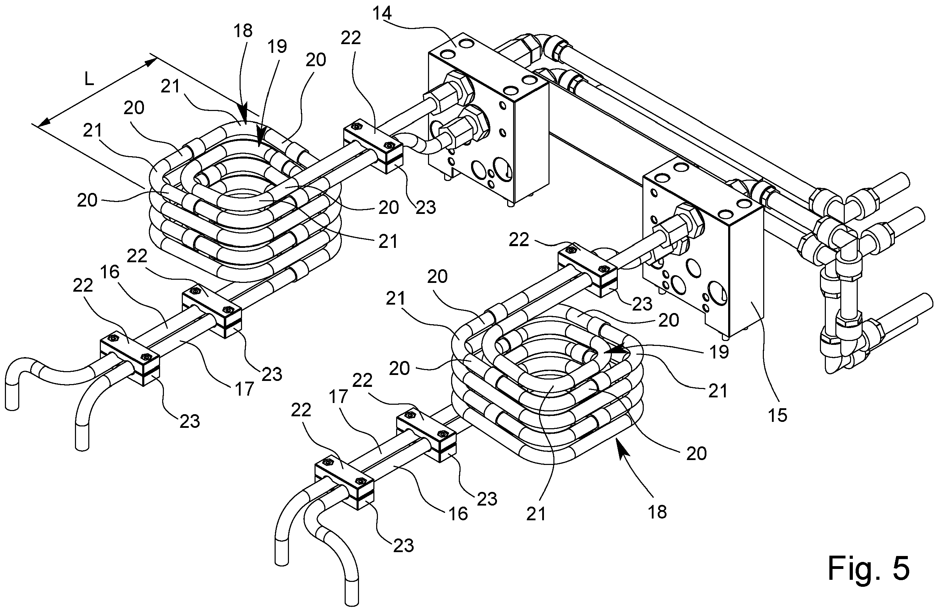

Durch das wendelförmig gebogene Ausgleichselement 18, 19 bzw. den jeweiligen Rohrleitungsabschnitt der Leitung 16, 17 wird eine Vergrößerung der Leitungslänge gegenüber der Leitungslänge bei geradliniger Leitungsführung realisiert. Dies ist in Fig. 5 schematisch dargestellt. Das Verhältnis der tatsächlichen Leitungslänge eines Ausgleichselements 18, 19 zur Leitungslänge L bei geradliniger Leitungsführung kann wenigstens 5, weiter vorzugsweise wenigstens 10, betragen. Somit wird eine ausreichend große Leitungslänge zum Ausgleich von Relativbewegungen zur Verfügung gestellt, um den Ausgleich von Relativbewegungen spannungsarm und bei geringem Verformungswiderstand zu ermöglichen.

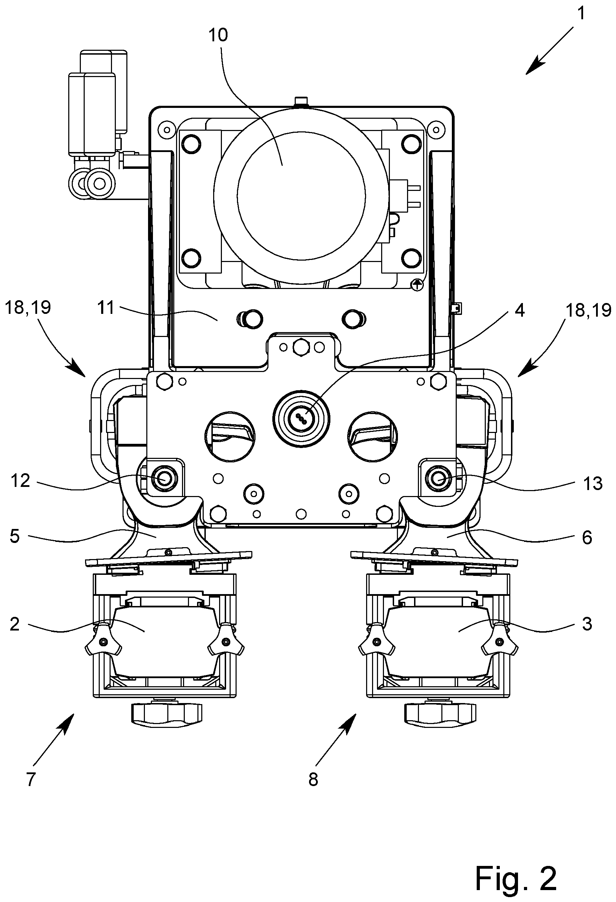

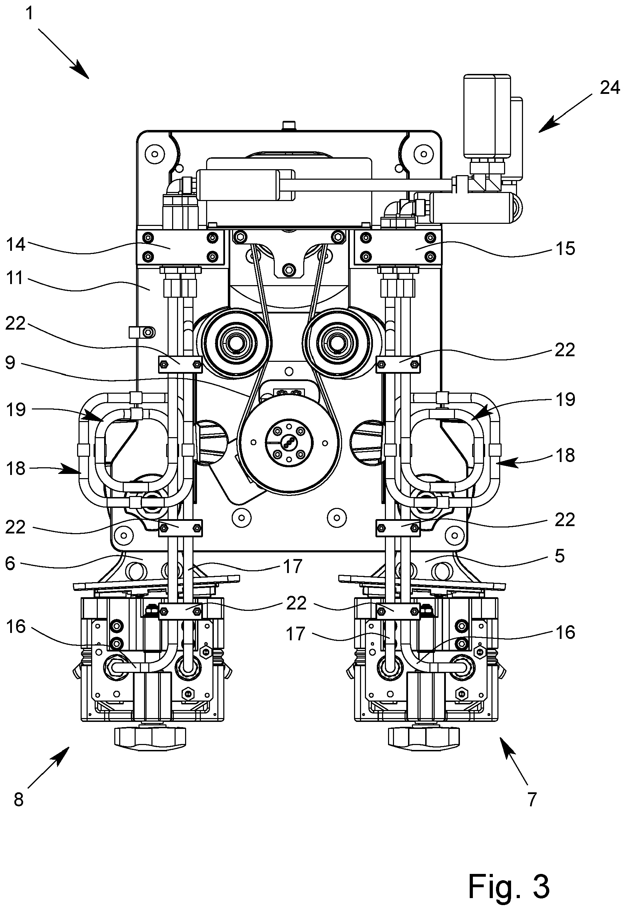

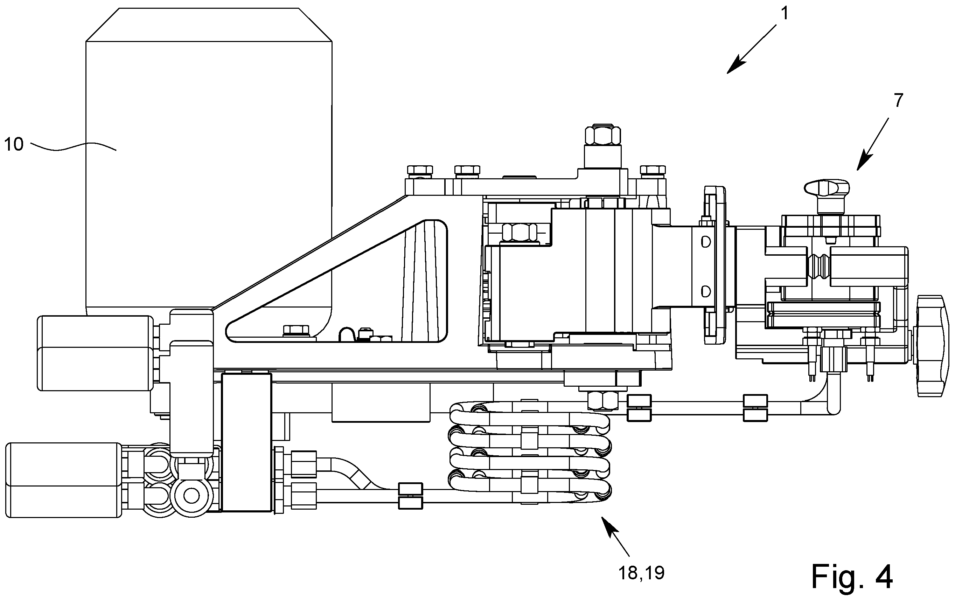

Um den Platzbedarf für die Anordnung der Ausgleichselemente 18, 19 im Inneren der Mühle 1 zu verringern, wird das Ausgleichselement 18 gebildet durch eine Wendel mit beispielsweise vier Windungen, während das eingeschachtelte innenliegende Ausgleichselement 19 vorliegend fünf Windungen mit geringerem Umfang aufweist. Es versteht sich, dass Art und Ausbildung sowie Anzahl der Windungen bei der in den Figuren 1 bis 5 gezeigten Ausführungsform der Schwingmühle 1 exemplarisch zu verstehen sind.

Jeweils zwei auf einer Seite einer Mahlbecherhalterung 7, 8 parallel verlaufende Leitungen 16, 17 sind miteinander über verschraubte Klemm- und Halteteile 22, 23 verbunden. Dadurch kann das Auftreten von Relativbewegungen zwischen den Leitungen 16, 17 in diesen Leitungsabschnitten verhindert werden und es findet der Bewegungsausgleich vorrangig im Bereich der wendelförmig gebogenen Ausgleichselemente 18, 19 statt.

Bei den stationären Teilen 14, 15 handelt es sich um starre Blöcke aus beispielsweise Polytetrafluorethylen (PTFE), die an der Grundplatte 11 befestigt sind. Die stationären Teile 14, 15 sind von der Schwingungsbewegung der Mahlbecherhalterungen 7, 8 entkoppelt. Im Inneren der stationären Teile 14, 15 sind Kanäle zur Durchleitung und Weiterleitung des Temperiermediums zu bzw. von einer Ver- und/oder Entsorgungseinrichtung 24 für das Temperiermedium vorgesehen. Die stationären Teile 14, 15 sind hierzu über weitere Rohrleitungen mit der Ver- und/oder Entsorgungseinrichtung 24 verbunden.

### Bezugszeichenliste:

- 1: Schwingmühle
- 2: Mahlbecher
- 3: Mahlbecher
- 4: Exzenterwelle
- 5: Schwinge
- 6: Schwinge
- 7: Mahlbecherhalterung
- 8: Mahlbecherhalterung
- 9: Keilriemen
- 10: Motoreinheit
- 11: Grundplatte
- 12: Lagerbolzen
- 13: Lagerbolzen
- 14: stationärer Teil
- 15: stationärer Teil
- 16: Leitung
- 17: Leitung
- 18: Ausgleichselement
- 19: Ausgleichselement
- 20: Leitungsabschnitt
- 21: Eckabschnitt
- 22: Halteteil
- 23: Halteteil
- 24: Ver- und/oder Entsorgungseinrichtung

## Patentansprüche

1. Labormühle (1) mit wenigstens einer schwingfähig gelagerten Mahlbecherhalterung (7, 8) für wenigstens einen Mahlbecher (2, 3) und mit wenigstens einer Leitung (16, 17) zum Transport eines flüssigen oder gasförmigen Mediums, wobei die Leitung (16, 17) wenigstens ein Ausgleichselement zum Ausgleich von Relativbewegungen zwischen der Mahlbecherhalterung (7, 8) und/oder dem Mahlbecher (2, 3) und einem stationären Teil der Labormühle (1) aufweist, **dadurch gekennzeichnet, dass** ein Ausgleichselement (18, 19) zum Ausgleich von Relativbewegungen vorgesehen ist, wobei das Ausgleichselement (18, 19) bei einer Schwingungsbewegung der Mahlbecherhalterung (7, 8) zumindest bereichsweise elastisch verformt wird und wobei der Ausgleich von Relativbewegungen frei von relativ zueinander bewegbar, insbesondere drehbar und/oder schwenkbar, miteinander verbundenen Teilen des Ausgleichselements (18, 19) erfolgt.

2. Labormühle (1) nach Anspruch 1, **dadurch gekennzeichnet, dass** das Ausgleichselement (18, 19) als im Wesentlichen starrer Rohrkörper ausgebildet ist.

3. Labormühle (1) nach Anspruch 1 oder 2, **dadurch gekennzeichnet, dass** das Ausgleichselement (18, 19) aus Metall, insbesondere aus Edelstahl oder einem Leichtmetall, wie Aluminium, besteht und/oder dass das Ausgleichselement aus einem bei Temperaturen von weniger als - 150 °C, insbesondere bei Temperaturen von weniger als - 190 °C, kältebeständigen Material besteht und/oder kältebeständig für den Transport von flüssigem Stickstoff ist.

4. Labormühle (1) nach einem der vorhergehenden Ansprüche, **dadurch gekennzeichnet, dass** das Ausgleichselement (18, 19) als Drehfeder ausgebildet ist oder wirkt.

5. Labormühle (1) nach einem der vorhergehenden Ansprüche, **dadurch gekennzeichnet, dass** die Leitung (16, 17) über die gesamte Länge als Rohrleitung ausgebildet und das Ausgleichselement (18, 19) ein Rohrleitungsabschnitt der Leitung (16, 17) ist.

6. Labormühle (1) nach einem der vorhergehenden Ansprüche, **dadurch gekennzeichnet, dass** die Leitung (16, 17) bei einer Schwingungsbewegung der Mahlbecherhalterung (7, 8) im Wesentlichen lediglich und/oder überwiegend im Bereich des Ausgleichselements (18, 19) elastisch verformt wird und dass die Verformung des Ausgleichselements (18, 19) in Richtung zu einem mit dem stationären Teil (14, 15) verbundenen Leitungsende abnimmt.

7. Labormühle (1) nach einem der vorhergehenden Ansprüche, **dadurch gekennzeichnet, dass** die Leitungslänge der Leitung (16, 17) durch das Ausgleichselement (18, 19) gegenüber einer Leitungslänge bei geradliniger Leitungsführung vergrößert ist und dass der Ausgleich von Relativbewegungen frei von relativ zueinander bewegbar, insbesondere drehbar und/oder schwenkbar, miteinander verbundenen Teilen des Ausgleichselements (18, 19) erfolgt.

8. Labormühle (1) nach einem der vorhergehenden Ansprüche, **dadurch gekennzeichnet, dass** das Verhältnis der Leitungslänge des Ausgleichselements (18, 19) zur Leitungslänge bei geradliniger Leitungsführung wenigstens 5, weiter vorzugweise wenigstens 10, beträgt.

9. Labormühle (1) nach einem der vorhergehenden Ansprüche, **dadurch gekennzeichnet, dass** das Ausgleichselement (18, 19) wenigstens einen bogenförmigen und/oder abgewinkelten Leitungsabschnitt aufweist, wobei, vorzugsweise, das Ausgleichselement (18, 19) als wendelförmiger oder in Form einer ebenen oder räumlichen Spirale ausgebildeter Leitungsabschnitt ausgebildet ist.

10. Labormühle (1) nach einem der vorhergehenden Ansprüche, **dadurch gekennzeichnet, dass** die Mahlbecherhalterung (7, 8) und/oder ein Mahlbecher (2, 3) an wenigstens zwei Leitungen (16, 17) zur Zuleitung und Ableitung eines flüssigen oder gasförmigen Mediums angeschlossen und/oder anschließbar ist, wobei jede Leitung (16, 17) wenigstens ein Ausgleichselement (18, 19) aufweist.

11. Labormühle (1) nach Anspruch 10, **dadurch gekennzeichnet, dass** die Ausgleichselemente (18, 19) der beiden Leitungen (16, 17) als ineinander geschachtelte und/oder einander durchsetzende Leitungsabschnitte ausgebildet sind.

12. Labormühle (1) nach Anspruch 10 oder 11, **dadurch gekennzeichnet, dass** die Ausgleichselemente (18, 19) der beiden Leitungen (16, 17) jeweils als wendelförmiger oder in Form einer ebenen oder räumlichen Spirale ausgebildeter Leitungsabschnitt ausgebildet sind und dass, vorzugsweise, die Leitungsabschnitte eine unterschiedliche Windungszahl und/oder einen unterschiedlichen Umfang aufweisen.

## Claims

1. Laboratory mill (1) with at least one vibrationally mounted grinding bowl holder (7, 8) for at least one grinding bowl (2, 3) and with at least one line (16, 17) for transporting a liquid or gaseous medium, wherein the line (16, 17) having at least one compensating element for compensating relative movements between the grinding bowl holder (7, 8) and/or the grinding bowl (2, 3) and a stationary part of the laboratory mill (1), **characterised in that** a compensating element (18, 19) is provided for compensating relative movements, wherein the compensating element (18, 19) is elastically deformed at least in regions during an oscillatory movement of the grinding bowl holder (7, 8) and wherein the compensation of relative movements is effected freely by parts of the compensating element (18, 19) connected to one another so as to be movable relative to one another, in particular rotatably and/or pivotably.

2. Laboratory mill (1) according to claim 1, **characterised in that** the balancing element (18, 19) is designed as a substantially rigid tubular body.

3. Laboratory mill (1) according to claim 1 or 2, **characterised in that** the balancing element (18, 19) consists of metal, in particular stainless steel or a light metal, such as aluminium, and/or that the balancing element consists of a material which is cold-resistant at temperatures of less than -150°C, in particular at temperatures of less than -190°C, and/or is cold-resistant for the transport of liquid nitrogen.

4. Laboratory mill (1) according to one of the preceding claims, **characterised in that** the balancing element (18, 19) is designed or acts as a torsion spring.

5. Laboratory mill (1) according to one of the preceding claims, **characterised in that** the line (16, 17) is formed as a pipeline over the entire length and the compensating element (18, 19) is a pipeline section of the line (16, 17).

6. Laboratory mill (1) according to one of the preceding claims, **characterised in that** the conduit (16, 17) is elastically deformed during an oscillatory movement of the grinding bowl holder (7, 8) substantially only and/or predominantly in the region of the compensating element (18, 19) and that the deformation of the compensating element (18, 19) decreases in the direction towards a conduit end connected to the stationary part (14, 15).

7. Laboratory mill (1) according to one of the preceding claims, **characterised in that** the line length of the line (16, 17) is increased by the compensating element (18, 19) compared with a line length in the case of straight-line routing, and **in that** the compensation of relative movements is affected free of parts of the compensating element (18, 19) connected to one another so as to be movable relative to one another, in particular rotatable and/or pivotable.

8. Laboratory mill (1) according to one of the preceding claims, **characterised in that** the ratio of the line length of the compensating element (18, 19) to the line length in the case of straight-line routing is at least 5, preferably at least 10.

9. Laboratory mill (1) according to one of the preceding claims, **characterised in that** the compensating element (18, 19) has at least one arcuate and/or angled line section, wherein, preferably, the compensating element (18, 19) is formed as a helical line section or in the form of a flat or spatial spiral.

10. Laboratory mill (1) according to one of the preceding claims, **characterised in that** the grinding bowl holder (7, 8) and/or a grinding bowl (2, 3) is connected and/or connectable to at least two lines (16, 17) for the supply and discharge of a liquid or gaseous medium, each line (16, 17) having at least one compensating element (18, 19).

11. Laboratory mill (1) according to claim 10, **characterised in that** the compensating elements (18, 19) of the two lines (16, 17) are formed as line sections which are nested in one another and/or pass through one another.

12. Laboratory mill (1) according to claim 10 or 11, **characterised in that** the compensating elements (18, 19) of the two lines (16, 17) are each formed as a helical line section or in the form of a flat or spatial spiral and that, preferably, the line sections have a different number of turns and/or a different circumference.

## Revendications

1. Broyeur de laboratoire (1) comportant au moins un support de bol de broyage (7, 8) monté oscillant pour au moins un bol de broyage (2, 3) et comportant au moins une conduite (16, 17) destinée au transport d'un milieu liquide ou gazeux, la conduite (16, 17) comportant au moins un élément de compensation destiné à la compensation des mouvements relatifs entre le support de bol de broyage (7, 8) et/ou le bol de broyage (2, 3) et une partie fixe du broyeur de laboratoire (1), **caractérisé en ce qu'**un élément de compensation (18, 19) destiné à la compensation des mouvements relatifs est fourni, l'élément de compensation (18, 19), lors d'un mouvement oscillant du support de bol de broyage (7, 8), étant, au moins par endroits, élastiquement déformé et la compensation des mouvements relatifs étant effectuée librement par des parties de l'élément de compensation (18, 19) reliées les unes aux autres, mobiles les unes par rapport aux autres, en particulier rotatives et/ou pivotantes.

2. Broyeur de laboratoire (1) selon la revendication 1, **caractérisé en ce que** l'élément de compensation (18, 19) est conçu comme un corps tubulaire sensiblement rigide.

3. Broyeur de laboratoire (1) selon la revendication 1 ou 2, **caractérisé en ce que** l'élément de compensation (18, 19) est en métal, en particulier en acier inoxydable ou en un métal léger tel que l'aluminium, et/ou **en ce que** l'élément de compensation est constitué d'une matière résistante au froid à une température inférieure à - 150 °C, en particulier à une température inférieure à -190 °C, et/ou est résistante au froid pour le transport d'azote liquide.

4. Broyeur de laboratoire (1) selon l'une quelconque des revendications précédentes, **caractérisé en ce que** l'élément de compensation (18, 19) est conçu ou agit comme un ressort de torsion.

5. Broyeur de laboratoire (1) selon l'une quelconque des revendications précédentes, **caractérisé en ce que** la conduite (16, 17) est conçue comme une conduite tubulaire sur toute sa longueur et l'élément de compensation (18, 19) est une section de conduite tubulaire de la conduite (16, 17).

6. Broyeur de laboratoire (1) selon l'une quelconque des revendications précédentes, **caractérisé en ce que** la conduite (16, 17), lors d'un mouvement oscillant du support de bol de broyage (7, 8), est déformée élastiquement, sensiblement uniquement et/ou principalement dans la zone de l'élément de compensation (18, 19) et **en ce que** la déformation de l'élément de compensation (18, 19) diminue vers une extrémité de conduite reliée à la partie fixe (14, 15).

7. Broyeur de laboratoire (1) selon l'une quelconque des revendications précédentes, **caractérisé en ce que** la longueur de la conduite (16, 17) est augmentée par l'élément de compensation (18, 19) par rapport à une longueur de conduite lors du guidage rectiligne de conduite et **en ce que** la compensation des mouvements relatifs est effectuée librement par des parties de l'élément de compensation (18, 19) reliées les unes aux autres, mobiles les unes par rapport aux autres, en particulier rotatives et/ou pivotantes.

8. Broyeur de laboratoire (1) selon l'une quelconque des revendications précédentes, **caractérisé en ce que** le rapport de la longueur de conduite de l'élément de compensation (18, 19) à la longueur de conduite lors du guidage rectiligne de conduite est d'au moins 5, de préférence d'au moins 10.

9. Broyeur de laboratoire (1) selon l'une quelconque des revendications précédentes, **caractérisé en ce que** l'élément de compensation (18, 19) comporte au moins une section de conduite coudée et/ou angulaire, l'élément de compensation (18, 19) étant conçu, de préférence, comme une section de conduite hélicoïdale ou sous la forme d'une spirale plane ou spatiale.

10. Broyeur de laboratoire (1) selon l'une quelconque des revendications précédentes, **caractérisé en ce que** le support de bol de broyage (7, 8) et/ou un bol de broyage (2, 3) est/sont relié(s) et/ou peut/peuvent être relié(s) à au moins deux conduites (16, 17) destinées à l'alimentation et à l'évacuation d'un milieu liquide ou gazeux, chaque conduite (16, 17) comportant au moins un élément de compensation (18, 19).

11. Broyeur de laboratoire (1) selon la revendication 10, **caractérisé en ce que** les éléments de compensation (18, 19) des deux conduites (16, 17) sont conçus comme des sections de conduite imbriquées l'une dans l'autre et/ou se traversant.

12. Broyeur de laboratoire (1) selon la revendication 10 ou 11, **caractérisé en ce que** les éléments de compensation (18, 19) des deux conduites (16, 17) sont respectivement conçus comme une section de conduite hélicoïdale ou sous la forme d'une spirale plane ou spatiale et **en ce que**, de préférence, les sections de conduite présentent un nombre de spires différent et/ou une taille différente.
